# EUROPÄISCHE PATENTSCHRIFT

(11) **EP 3 685 716 B1**
(45) Veröffentlichungstag und Bekanntmachung des Hinweises auf die Patenterteilung: **22.06.2022**
(21) Anmeldenummer: 20150322.4
(22) Anmeldetag: 06.01.2020
(51) Int. Cl.: A47J 31/44, A47J 31/60, A47J 31/46

(54) **GETRÄNKEAUTOMAT**
BEVERAGE MACHINE
DISTRIBUTEUR AUTOMATIQUE DE BOISSONS

(30) Priorität: 24.01.2019 DE 102019101677
(43) Veröffentlichungstag der Anmeldung: 29.07.2020
(73) Patentinhaber: Miele & Cie. KG, 33332 Gütersloh (DE)
(72) Erfinder: Tembaak, Jutta, 49492 Westerkappeln (DE)

(56) Entgegenhaltungen:
- EP-A1- 2 992 793
- WO-A1-2012/035247
- DE-A1-102007 040 307
- DE-A1-102011 081 010
- DE-A1-102016 109 953

## Beschreibung

Die Erfindung betrifft einen Getränkeautomaten nach dem Oberbegriff der unabhängigen Patentansprüche 1 oder 2.

Ein derartiger Getränkeautomat weist ein Gehäuse auf, in dem die für die Herstellung eines Aufgussgetränkes erforderlichen Elemente untergebracht sind. Wenigstens eine Seite des Gehäuses ist dabei von außen frei zugänglich. Bei einem Getränkeautomaten, der beispielsweise in einen Einbauschrank eingesetzt ist, stellt das Gehäuse lediglich die sichtbare Frontseite dar. In dem Getränkeautomaten ist ein Strömungsleitungssystem enthalten, das mindestens eine Wasserquelle, Fluidleitungen und Aggregate zur Strömungsführung und Herstellung von Aufgussgetränken sowie zur Aufbereitung oder Ergänzung wenigstens eines Aufgussgetränkes mit Wasserdampf oder zur Verfügung stehender Getränkezusätze, wie zum Beispiel Milch oder Zucker, umfasst. Über geeignete Ausgabeeinrichtungen des Getränkeautomaten können in an sich bekannter Weise der Wasserdampf, das Aufgussgetränk selbst und/oder Getränkezusätze abgegeben werden, sodass das Aufgussgetränk dadurch in seiner Zusammensetzung oder in seinem Geschmack an die individuellen Bedürfnisse des Anwenders angepasst werden kann. Eine elektronische Steuerungsvorrichtung des Getränkeautomaten ist darüber hinaus dafür ausgelegt und dient dazu, die Fluidleitungen und Aggregate zur Strömungsführung und Herstellung mindestens eines Aufgussgetränkes zu aktivieren und zu deaktivieren sowie die Steuerungs- und Überwachungsprozesse des Getränkeautomaten durchzuführen.

Ein derartiger Getränkeautomat ist bereits aus der DE 10 2011 081 010 A1 bekannt. Der in dieser Druckschrift offenbarte Getränkeautomat verfügt über eine Reinigungseinrichtung zur Durchführung eines Reinigungs- und/oder Entkalkungsprogrammes, die eine starre, mechanische Kopplungsvorrichtung aufweist, in die ein mit Reinigungsmittel und/oder mit Entkalkungsmittel befüllter Vorratsbehälter eingesetzt wird, um ein entsprechendes Programm in dem Strömungsleitungssystem des Getränkeautomaten durchführen zu können. An dieser Stelle ist anzumerken, dass die zum Einsatz kommenden Entkalkungsmittel und Reinigungsmittel unter dem Synonym "Pflegemittel" zusammengefasst werden können und nachfolgend zum Teil so bezeichnet sind. Aus der DE 10 2011 081 010 A1 ist es auch bekannt, eine Identifikationsvorrichtung an einer Kopplungsvorrichtung des Vorratsbehälters vorzusehen, um den eingesetzten Vorratsbehälter geräteseitig eindeutig identifizieren zu können. Der Getränkeautomat weist hierfür seinerseits einen maschinenlesbaren Code auf. Alternativ hierzu können gemäß dem Offenbarungsgehalt der Druckschrift auch verschiedene, mechanische Codierungen vorgesehen werden, um den eingesetzten Vorratsbehälter zu erkennen. Die eindeutige Identifizierung des Vorratsbehälters ist deshalb erforderlich, um der elektronischen Steuerungsvorrichtung ein Signal zu übermitteln durch das erkannt wird, ob sich in dem Vorratsbehälter ein Reinigungsmittel oder ein Entkalkungsmittel befindet. Nachteilig ist bei einem derartigen Getränkeautomaten allerdings, dass die zum Einsatz kommenden Vorratsbehälter entweder als Einwegbehälter ausgeführt sind, bei denen das darin enthaltene Mittel aufgrund der Schwerkraft in den Getränkeautomaten überführt wird oder dass die Vorratsbehälter jeweils eine Pumpe enthalten, um das Reinigungs- und/oder Entkalkungsmittel aus dem Vorratsbehälter heraus zu fördern und dem Strömungsleitungssystemen zuzuführen, wenn ein Reinigungsprogramm oder ein Entkalkungsprogramm durchgeführt werden soll. Durch eine in dem Vorratsbehälter enthaltene Pumpe ist der Herstellungsaufwand für die Vorratsbehälter erheblich und führt zwangsläufig auch zu erhöhten Herstellungs- und Anschaffungskosten. Die Anschaffungskosten sind auch bei der zuvor beschriebenen Einweglösung hoch. Zudem entstehen dabei Abfälle, die beispielsweise aus Gründen des Umweltschutzes vermieden werden sollten.

Aus der DE 10 2016 109 953 A1 ist darüber hinaus ein Getränkeautomat zur Zubereitung von Aufgussgetränken bekannt, der ein Strömungsleitungssystem mit einer Ventilanordnung und eine zur Durchführung eines Reinigungs- und/oder Pflegevorganges geeignete Pflegevorrichtung aufweist. Die Pflegevorrichtung umfasst dabei einen ersten Vorratsbehälter zur Bevorratung eines Reinigungsmittels und einen zweiten Vorratsbehälter zur Bevorratung eines Pflegemittels, bei dem es sich beispielsweise um ein Entkalkungsmittel handeln kann. Die Besonderheit der in dieser Druckschrift offenbarten Lösung besteht darin, dass beide, zeitgleich in den Getränkeautomaten eingesetzten Vorratsbehälter, mit ihrer Öffnung geozentrisch ausgerichtet sind, das heißt, mit ihrer Öffnung nach unten weisend. Dabei ist eine Sprühvorrichtung vorhanden, die in die jeweilige Öffnung eines der Vorratsbehälter hinein gerichtet wird, wodurch nur eines der in den Vorratsbehältern enthaltenen Reinigungsmittel oder Pflegemittel in Abhängigkeit des durchzuführenden Reinigungsprogrammes oder Pflegeprogrammes angesprüht und in eine Lösung überführt wird. Anders ausgedrückt ist es bei diesem Getränkeautomaten erforderlich, ein Reinigungsprogramm oder ein Pflegeprogramm auszuwählen, sodass die Sprühvorrichtung den diesem Programm entsprechenden Vorratsbehälter ansteuert und das darin enthaltene Mittel in eine Lösung überführt, das anschließend in das Strömungsleitungssystem eingebracht wird. Bei dem in der DE 10 2016 109 953 A1 beschriebenen Getränkeautomaten sind stets zwei Vorratsbehälter vorhanden, wobei jeweils nur einer der Vorratsbehälter für die Durchführung eines Pflegeprogramms erforderlich ist. Der Platzbedarf hierfür ist erheblich, sodass ein derartiger Getränkeautomat wenig kompakt ausgeführt werden kann. Ein weiterer gattungsgemäßer Getränkeautomat mit einem Träger für einen Vorratsbehälter, der sich aus einer frontseitigen Öffnung herausziehen lässt, ist aus der Druckschrift WO 2012/035247 bekannt.

Für den optimalen Betrieb eines Getränkeautomaten ist es erforderlich, regelmäßig Entkalkungsprogramme oder Reinigungsprogramme durchzuführen, mittels derer das Strömungsleitungssystem von Rückständen befreit wird, die bei der Herstellung der Aufgussgetränke entstehen. Dabei ist es aus heutiger Sicht nicht immer erforderlich, das gesamte Strömungsleitungssystem zu reinigen oder zu entkalken. Vielmehr bildet sich beispielsweise Kalk hauptsächlich in Bereichen des Strömungsleitungssystems, die stromabwärts der in dem Getränkeautomaten vorhandenen Heizeinrichtung vorhanden sind und einer dadurch gegebenen thermischen Beanspruchung unterliegen, die für die Entstehung des Kalks förderlich ist. Generell versteht es sich natürlich von selbst, dass nach einer erfolgten Entkalkung und/oder Reinigung des Strömungsleitungssystems abschließend stets eine gründliche Spülung mit frischem Wasser durchgeführt werden muss, um sämtliche Rückstände des Entkalkungsvorganges beziehungsweise des Reinigungsvorganges zu beseitigen!

Eine wesentliche Erkenntnis zur Optimierung der Durchführung von Reinigungsprogrammen oder Entkalkungsprogrammen in Getränkeautomaten besteht darin, dass es regional unterschiedliche Härtegrade des zum Einsatz kommenden Trinkwassers gibt, sodass beispielsweise die Entkalkungsprogramme in Abhängigkeit von dieser Wasserhärte durchgeführt werden sollten, um eine unnötige Umweltbelastung oder eine mangelhafte Entkalkung zu vermeiden. Darüber hinaus sind von Anwender zu Anwender die speziellen Bedürfnisse des Bezugs von Aufgussgetränken sehr unterschiedlich. Beispielsweise kann es vorkommen, dass in Getränkeautomaten der hier betroffenen Art, wie sie beispielsweise als Kaffeevollautomaten zum Einsatz kommen, häufig Getränke hergestellt werden, denen Milch zugesetzt wird. In diesen Fällen müssen die Reinigungsprogramme sehr häufig durchgeführt werden, um den hygienischen Anforderungen an einen derartigen Getränkeautomaten gerecht zu werden. Erfolgt hingegen selten oder niemals die Beimengung von Milch zu dem hergestellten Aufgussgetränk, so sind Reinigungsprogramme selten erforderlich. Zusammenfassend ist es daher nicht sinnvoll, stets mehrere Vorratsbehälter in einem Getränkeautomaten vorzusehen, die ein Entkalkungsmittel beziehungsweise ein Reinigungsmittel enthalten. Der hierfür erforderliche Bauraum kann sinnvollerweise eingespart werden, sodass der Getränkeautomat insgesamt kompakter ausgeführt ist.

Der Erfindung stellt sich somit das Problem einen Getränkeautomaten bereitzustellen, dessen Aufbau einfacher und kompakter ausgeführt ist, als bislang bekannte Lösungen und der flexibel an die konkreten Bedürfnisse des jeweiligen Anwenders beziehungsweise an die gegebenen Bedingungen, wie die lokal vorhandene Wasserhärte, angepasst werden kann. Erfindungsgemäß wird dieses Problem durch einen Getränkeautomaten mit den Merkmalen der Patentansprüche 1 oder 2 gelöst.

Vorteilhafte Ausgestaltungen und Weiterbildungen der Erfindung ergeben sich aus den nachfolgenden Unteransprüchen.

Ein Getränkeautomat, umfassend ein Gehäuse mit wenigstens einer von außen frei zugänglichen Seite, ein Strömungsleitungssystem mit einer Wasserquelle, Fluidleitungen und Aggregaten zur Strömungsführung und Herstellung mindestens eines Aufgussgetränkes sowie zur Aufbereitung oder Ergänzung des Aufgussgetränkes mittels Wasserdampfes oder zur Verfügung stehender Getränkezusätze und mit Ausgabeeinrichtungen zur Abgabe des Wasserdampfes, des mindestens einen Ausfgussgetränkes und/oder der Getränkezusätze, ferner umfassend eine elektronische Steuerungsvorrichtung, die dazu ausgelegt ist, die Fluidleitungen und Aggregate zur Strömungsführung und Herstellung mindestens eines Aufgussgetränkes zu aktivieren und zu deaktivieren sowie die Steuerungs- und Überwachungsprozesse des Getränkeautomaten durchzuführen, wurde erfindungsgemäß dahingehend weitergebildet, dass das Gehäuse des Getränkeautomaten an einer von außen frei zugänglichen Seite einen Aufnahmeraum mit einer Kopplungsvorrichtung zur lösbaren Aufnahme eines hierzu passenden Trägers aufweist und in den Träger abwechselnd jeweils einer von mindestens zwei austauschbaren Vorratsbehältern einsetzbar und aus dem Träger entnehmbar ist.

Mit der Erfindung wird wertvoller Bauraum in dem Getränkeautomaten eingespart, sodass dieser insgesamt sehr kompakt ausgeführt werden kann, ohne dass Hygiene- oder Komforteinbußen hingenommen werden müssen. Der Getränkeautomat weist lediglich einen Aufnahmeraum auf, in den ein Träger mit einem wahlweise darin eingesetzten Vorratsbehälter eingebracht werden kann. Damit lässt sich die erforderliche Reinigung oder Entkalkung optimal an die jeweils gegebenen Anforderungen oder Bedingungen anpassen. Der entsprechende Vorratsbehälter enthält dabei entweder ein Reinigungsmittel oder ein Entkalkungsmittel und ist vor Sicht und unberechtigtem Zugriff geschützt in dem durch einen Deckel, eine Klappe oder eine Tür verschließbaren Aufnahmeraum aufgenommen. Die elektronische Steuerungsvorrichtung wählt erfindungsgemäß über eine hierzu passende Software automatisch das durchzuführende Programm aus, das in dem Getränkeautomaten durchgeführt werden soll, sobald erkannt wurde, welcher Vorratsbehälter in den Träger eingesetzt ist. Bei einem Systemwechsel, das heißt, wenn ein anderer, als der zuvor vorhandene Vorratsbehälter eingesetzt wird, erfolgt zunächst eine gründliche Spülung des Strömungsleitungssystems mit Frischwasser, damit keine Reste des jeweils anderen Mittels mehr enthalten sind. Der Zeitpunkt der Durchführung eines Entkalkungsprogrammes und/oder die Zeitdauer der Einwirkung und/oder die Karbonathärte des Wassers sind in der elektronischen Steuerungsvorrichtung programmiert oder durch den Anwender manuell einstellbar. Durch die Möglichkeit der Programmierung beziehungsweise der manuellen Eingabe ist der Anwender jederzeit in der Lage, automatisch ablaufende Prozess in seinem Sinne zu beeinflussen. So kann beispielsweise bei einem Getränkeautomaten die Entkalkung stets zu Zeiten durchgeführt werden, in denen kein Getränkebezug erfolgt. Es ist vorstellbar, dass die Entkalkung somit zum Beispiel auf die Nachtstunden verlegt wird.

Eine erste Ausgestaltung der Erfindung besteht darin, dass die Kopplungsvorrichtung aus einer Aufnahme oder Führung für den hierzu korrespondierend ausgeführten Träger besteht. Zur Umsetzung dieses Lösungsvorschlages stehen dem Fachmann verschiedene Möglichkeiten zur Verfügung. So ist es beispielsweise möglich, dass die Kopplungsvorrichtung eine Schwalbenschwanzführung ist, wobei eine Aufnahmenut in dem Aufnahmeraum und die hierzu korrespondierende, schwalbenschwanzartige Gegenkontur am Träger ausgebildet ist.

Wie eingangs bereits ausgeführt wurde, ist bei einem erfindungsgemäßen Getränkeautomaten vorgesehen, dass mindestens zwei Vorratsbehälter zur Verfügung stehen, in denen jeweils unterschiedliche Pflegemittel aufgenommen sind. Davon sind selbstverständlich auch Lösungen umfasst, bei denen mehr als zwei Vorratsbehälter vorhanden sind. So kann beispielsweise ein weiterer Vorratsbehälter mit einem Entkeimungsmittel oder mit einem Entkalkungsmittel abweichender Konzentration zur Verfügung gestellt werden, der wahlweise ebenfalls in den Träger und somit zusammen mit dem Träger in die Kopplungsvorrichtung des Getränkeautomaten eingesetzt werden kann, um beispielsweise ein geeignetes Entkeimungsprogramm durchzuführen.

Da jeder der vorhandenen Vorratsbehälter dafür vorgesehen ist, je ein Mittel zur Durchführung eines Pflegeprogramms zu enthalten, kann gemäß einem weiterführenden Vorschlag der Erfindung der erste Vorratsbehälter mit einem wasserlöslichen oder mit Wasser verdünnbaren Reinigungsmittel und der zweite, beziehungsweise jeder weitere Vorratsbehälter mit einem wasserlöslichen oder mit Wasser verdünnbaren Entkalkungsmittel oder Entkeimungsmittel befüllt sein. Dabei ist insbesondere von Bedeutung, dass die Pflegemittel jeweils wasserlöslich sind. Dies hat den Vorteil, dass die Pflegemittel in einem festen oder pastösen Aggregatzustand vorliegen können, was insbesondere Transportvorteile und Lagerungsvorteile mit sich bringt. Dadurch kann der Vorratsbehälter im Vergleich zu flüssigen Pflegemitteln verhältnismäßig klein ausgelegt werden. Darüber hinaus besteht bei flüssigen Pflegemitteln ein Exportproblem, das aus dem Verbot der grenzüberschreitenden Überführung von Flüssigkeiten herrührt. Hier sind zumeist aufwändige Zulassungsverfahren erforderlich, um grenzüberschreitend Exporte vornehmen zu können. Ein anderer Vorteil des festen oder pastösen Aggregatzustandes ist auch darin zu sehen, dass auch unter extremen thermischen Bedingungen keine Änderungen des Aggregatzustandes eintreten. So sind Lager- oder Transportbedingungen im Bereich von -20 °C bis +70 °C keine Seltenheit und können ausschließlich von derartigen Pflegemitteln problemlos überstanden werden, ohne dass Qualitätseinbußen zu befürchten sind. Flüssige Pflegemittel bergen zudem das Risiko, dass bei einer Beschädigung der Verpackung das Pflegemittel ausläuft. Die dadurch hervorgerufenen Schäden sind durch feste oder pastöse Pflegemittel vermeidbar.

Die zuvor genannte Maßnahme bietet jedoch noch einen weiteren, sehr wesentlichen Vorzug, der darin besteht, dass die Vorratsbehälter in einer vertikalen Anordnung in den Träger eingesetzt werden können, sodass die Behälteröffnung geozentrisch ausgerichtet ist. Mit anderen Worten weist die Behälteröffnung nach unten und kann folglich durch eine Sprühvorrichtung mit Wasser benetzt werden, sodass das in dem Vorratsbehälter enthaltene Pflegemittel in eine Lösung übergeht. Durch die Zeitdauer des Sprühvorganges lässt sich die Konzentration des Pflegemittels sehr genau einstellen, was Vorteile hinsichtlich der Wirksamkeit und des Verbrauchs an Pflegemittel mit sich bringt. Eine derartige Sprühvorrichtung wurde im Zusammenhang mit der Erläuterung des Standes der Technik bereits erwähnt und bildet somit einen Bestandteil dieser Ausgestaltung der Erfindung.

Ein grundlegender Erfindungsgedanke besteht vorliegend darin, dass mehrere Träger vorhanden sind und jeder Träger eine Aufnahmeöffnung aufweist, in die nur einer der vorhandenen Vorratsbehälter formschlüssig einsetzbar ist. Dementsprechend weist die Aufnahmeöffnung ein Innengewinde und der jeweils hierzu passende Vorratsbehälter ein nur zu diesem Innengewinde korrespondierendes Außengewinde auf. Anstelle eines Gewindes kann selbstverständlich auch eine Schnappverbindung oder eine Rastverbindung vorgesehen werden und liegt damit ebenfalls im Bereich der Erfindung. Die Bezeichnung "Gewinde" ist damit nicht einschränkend für die Umsetzung dieses Lösungsvorschlages zu sehen.

Als Alternative hierzu besteht eine Ausgestaltung der Erfindung darin, dass nur ein, in zwei unterschiedlichen Einbaulagen in den Aufnahmeraum einsetzbarer Träger mit einer einzigen Aufnahmeöffnung vorhanden ist, wobei diese Aufnahmeöffnung, bezogen auf eine horizontale Ebene des Trägers, an ihren einander gegenüberliegenden Seiten jeweils unterschiedliche Innengewinde aufweist, in die von je einer Seite des somit wendbaren Trägers her jeweils nur einer der vorhandenen Vorratsbehälter mit seinem korrespondierenden Außengewinde einschraubbar ist. Eine derartige Ausführung bringt den Vorteil mit sich, dass nur ein Träger und zwei hierzu passende Vorratsbehälter vorhanden sein müssen. Dieser Lösungsvorschlag stellt damit eine zusätzliche Vereinfachung dar und erweist sich damit als besonders vorteilhaft und kostengünstig.

Wie dies eingangs bereits im Zusammenhang mit der Erörterung des Standes der Technik ausgeführt wurde, ist es sinnvoll, an dem Träger eine Detektierungseinheit vorzusehen, die aus einem Signalgeber und einem hierzu korrespondierenden Signalaufnehmer besteht. Die von der Detektierungseinheit erzeugten Signale werden bei in den Aufnahmeraum eingesetztem Träger mittels der elektronischen Steuerungsvorrichtung erfasst, sodass durch eine geeignete Software der elektronischen Steuerungsvorrichtung der in den Aufnahmeraum eingesetzte Träger und/oder der in dem Träger aufgenommene Vorratsbehälter erkannt wird und ein dem entsprechendes Programm ausgewählt werden kann. Wird also beispielsweise ein Vorratsbehälter mit einem Entkalkungsmittel in den Träger eingesetzt und dieser von der Detektierungseinheit erkannt, so wird in dem Getränkeautomaten ein Entkalkungsprogramm gestartet, wenn dies für die Wartung beziehungsweise Pflege des Getränkeautomaten erforderlich ist.

Die Detektierungseinheit kann dabei zum Beispiel eine optische Signalverarbeitung aufweisen, eine Codierungseinheit enthalten oder sein oder Microschalter aufweisen, deren Signale von der elektronischen Steuerungsvorrichtung verarbeitbar sind.

Wie zuvor bereits ausgeführt wurde, gibt es innerhalb des Strömungsleitungssystems eines Getränkeautomaten unterschiedlich belastete Fluidwege. So ist beispielsweise festzustellen, dass sich Kalkablagerungen überwiegend stromabwärts der Heizeinrichtung verstärkt ausbilden, während in den stromaufwärts liegenden Bestandteilen der Fluidwege kaum Kalkablagerungen zu verzeichnen sind. Daher ist es aus ökonomischen und ökologischen Gründen sinnvoll, ein Entkalkungsmittel erst stromabwärts der Heizeinrichtung zum Einsatz zu bringen. Aus dem genannten Grund geht ein weiterführender Vorschlag der Erfindung dahin, dass je Pflegemittel ein Fluidweg innerhalb des Strömungsleitungssystems vorhanden ist und ein von der Detektierungseinheit an die elektronische Steuerungsvorrichtung übermitteltes Signal zur Freischaltung je eines Fluidweges nutzbar ist. Somit wird nach dem Erkennen des in den Aufnahmeraum eingesetzten Trägers mit dem darin aufgenommenen Vorratsbehälter jeweils nur der Fluidweg des Strömungsleitungssystems freigeschaltet und damit einem Pflegeprogramm unterzogen, der dem in dem Vorratsbehälter enthaltenen Pflegemittel entspricht.

Zur Umsetzung der Schaltvorgänge und damit zur Freigabe oder Sperrung einzelner Fluidwege steht entsprechend einer weiterbildenden Maßnahme der Erfindung mindestens eine Ventileinheit innerhalb des Strömungsleitungssystems zur Verfügung. Vorzugsweise werden jedoch mehrere Ventileinheiten vorgesehen, deren Funktion aufeinander abgestimmt ist. Im Rahmen der Erfindung kommt damit mindestens eine steuerbare Ventileinheit zum Einsatz, um beispielsweise den Entkalkungszweig des Strömungsleitungssystems von dem Teil, der ausschließlich für die Getränkezubereitung dient, zu trennen. Mit anderen Worten wird durch die Ventileinheit gesteuert, dass das Entkalkungsmittel nur dann in das Strömungsleitungssystem eintritt, wenn der Getränkeautomat außer Betrieb ist, das heißt, nicht für die Zubereitung von Getränken genutzt wird

Die Erfindung wird nachfolgend anhand der beigefügten Zeichnungen näher erläutert. Das gezeigte Ausführungsbeispiel stellt dabei keine Einschränkung auf die dargestellte Variante dar, sondern dient lediglich der Erläuterung eines Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: einen Getränkeautomaten am Beispiel eines freistehenden Einzelgerätes in perspektivischer Ansicht,
- Figur 2:: den Getränkeautomaten aus Figur 1 in einer rückseitigen Ansicht,
- Figur 3:: einen Teil des Strömungsleitungssystems eines Getränkeautomaten mit einem ersten Fluidweg,
- Figur 4:: einen Teil des Strömungsleitungssystems eines Getränkeautomaten mit einem zweiten Fluidweg,
- Figur 5:: einen Teil des Strömungsleitungssystems eines Getränkeautomaten mit einem dritten Fluidweg,
- Figur 6:: eine erste Ausführungsvariante eines Trägers als isoliertes Einzelteil und in räumlicher Darstellung,
- Figur 7:: ein zu dem Träger aus Figur 6 passender Vorratsbehälter als isoliertes Einzelteil,
- Figur 8:: eine zweite Ausführungsvariante eines Trägers als isoliertes Einzelteil und in räumlicher Darstellung,
- Figur 9:: ein zu dem Träger aus Figur 8 passender Vorratsbehälter als isoliertes Einzelteil und
- Figur 10:: andeutungsweise die rückseitige Ansicht eines Getränkeautomaten mit einem Aufnahmeraum und einem teilweise darin eingeschobenen Träger.

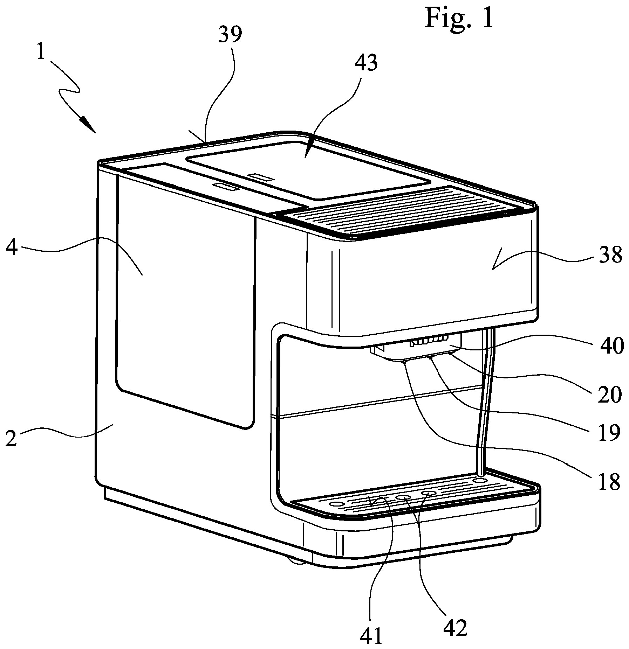

Die Figur 1 zeigt einen Getränkeautomaten 1 am Beispiel eines freistehenden Einzelgerätes in perspektivischer Ansicht, bei dem es sich um einen Kaffeevollautomaten handelt. Der Getränkeautomat 1 weist ein Gehäuse 2 mit mehreren Seitenflächen, mit einer Frontseite 38 und einer Rückseite 39 auf. In eine der Seitenflächen ist eine Wasserquelle 4 in Form eines abnehmbaren Wassertanks integriert. Die Oberseite des Getränkeautomaten 1 weist ferner einen Bohnenbehälterdeckel 43 auf, der den darunter angeordneten Bohnenbehälter für die Aufnahme der in dem Getränkeautomaten 1 zu verarbeitenden Kaffeebohnen optisch abgedeckt. Betrachtet man die Frontseite 38 des Getränkeautomaten 1 in Figur 1, so ist dort eine Ausgabeeinheit 40 erkennbar, an deren Unterseite sich zahlreiche Ausgabeeinrichtungen 18, 19, 20 befinden. Bei den Ausgabeeinrichtungen 18, 19, 20 handelt es sich vorliegend jeweils um Düsen, die der Abgabe des in dem Getränkeautomaten 1 erzeugten Aufgussgetränkes beziehungsweise der Abgabe von Heißwasser oder Getränkezusätzen, wie Milch, dienen. So kann beispielsweise über die Ausgabeeinrichtung 20 ein Kaffeegetränk, über die Ausgabeeinrichtung 19 Heißwasser und über die Ausgabeeinrichtung 18 Milch abgegeben werden. Unterhalb der Ausgabeeinheit 40 ist ein Abtropfblech 41 als Abstellfläche für ein Trinkgefäß angeordnet, in das das Aufgussgetränk beziehungsweise die Getränkezusätze gefüllt werden können. Das Abtropfblech 41 weist in an sich bekannter Weise mehrere Ablauföffnungen 42 auf, über die übergelaufene oder verspritzte Flüssigkeitsreste in eine unterhalb des Abtropfbleches 41 vorhandene Auffangschale abgeführt werden.

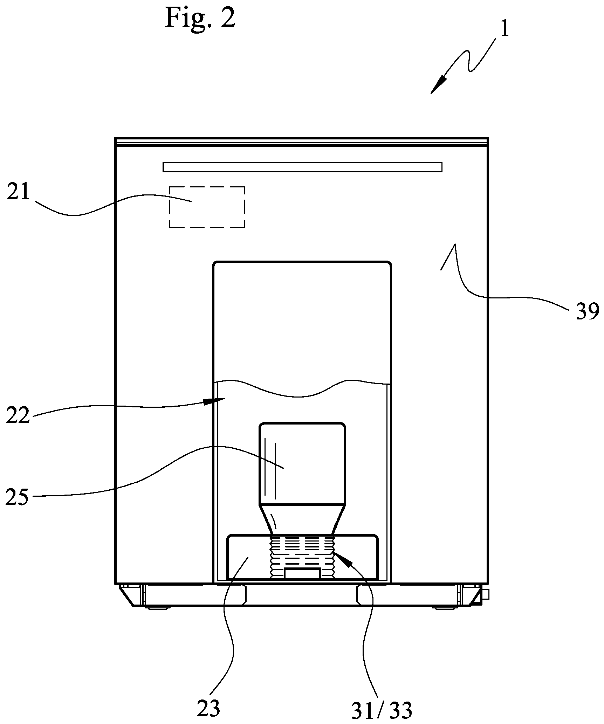

Der insoweit in seinen Grundzügen bekannte Getränkeautomat ist in der Figur 2 in einer Ansicht von seiner Rückseite 39 betrachtet dargestellt. Aus dieser Ansicht wird erkennbar, dass der Getränkeautomat 1 an seiner von außen frei zugänglichen Rückseite 39 einen durch eine Tür verschlossenen Aufnahmeraum 22 aufweist, der vorliegend dazu dient, über eine Kopplungsvorrichtung einen Träger 23 aufzunehmen, in den ein Vorratsbehälter 25 lösbar eingesetzt ist. Der Vorratsbehälter 25 enthält hierbei ein Entkalkungsmittel, wie es zur Pflege des Strömungsleitungssystems 3 des Getränkeautomaten 1 erforderlich ist. Zur Herstellung der lösbaren Verbindung zwischen Vorratsbehälter 25 und Träger 23 dient einerseits ein Außengewinde 33 am Vorratsbehälter 25 und ein hierzu korrespondierendes Innengewinde 31 in dem Träger 23. Lediglich andeutungsweise ist in der Figur 2 eine elektronische Steuerungsvorrichtung 21 durch gestrichelte Linien dargestellt, die sich im Innenraum des Getränkeautomaten 1 befindet und zur Steuerung verschiedener Prozesse beziehungsweise zur Ansteuerung diverser Aggregate erforderlich ist. Die elektronische Steuerungsvorrichtung 21 weist hierfür eine geeignete Software auf.

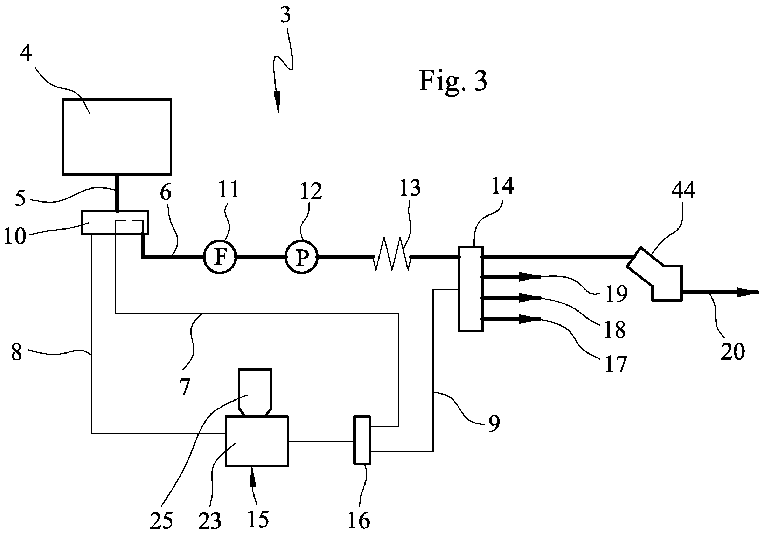

Die Figur 3 zeigt einen Teil des Strömungsleitungssystems 3 eines Getränkeautomaten 1 mit einem ersten Fluidweg, der für die Zubereitung eines Aufgussgetränkes erforderlich ist. Dieser Fluidweg ist in der Figur 3 durch fett gedruckte Linien hervorgehoben dargestellt. Er beginnt an einer Wasserquelle 4, bei der es sich um den zuvor bereits beschriebenen Wassertank handelt. Von dem Wassertank 4 geht eine erste Fluidleitung 5 ab, die in ein erstes Aggregat 10 mündet, bei dem es sich um eine Ventileinheit I, genauer gesagt um ein Mehrwegeventil, handelt. Von der Ventileinheit I zweigt eine Fluidleitung 6 ab, in die, einander folgend, mehrere Aggregate 11-14 integriert sind. Bei diesen Aggregaten handelt es sich um ein Durchflussmessgerät 11, eine Pumpe 12, eine Heizeinrichtung 13 und eine weitere Ventileinheit II, die mit der Bezugsziffer 14 bezeichnet ist. An die mit 14 bezeichnete Ventileinheit II schließt sich hier eine Brüheinheit 44 an, in der das in der Heizeinrichtung 13 auf eine Brühtemperatur erhitzte Wasser aus dem Wassertank 4 mit dem für die Erzeugung des Aufgussgetränkes erforderlichen Kaffeepulver zusammengeführt und aufgebrüht wird. Im Anschluss daran wird der dadurch erzeugte Kaffee über die Ausgabeeinrichtung 20 in ein auf dem Abtropfblech 41 abgestelltes Trinkgefäß gefüllt, wie dies zuvor bereits beschrieben wurde. Da dem somit erzeugten Kaffeegetränk auch weitere Getränkezusätze hinzugefügt werden können, sind in der Darstellung der Figur 3 auch die übrigen Ausgabeeinrichtungen 17, 18, 19 hervorgehoben dargestellt. Der über die Ausgabeeinrichtung 17 zur Verfügung stehende Wasserdampf kann beispielsweise für das Aufschäumen von Milch verwendet werden. Auf die übrigen, in der Figur 3 gezeigten Elemente des Strömungsleitungssystems 3 wird im Zusammenhang mit den nachfolgenden Figuren noch näher eingegangen, weshalb sie hier nicht weiter erläutert werden.

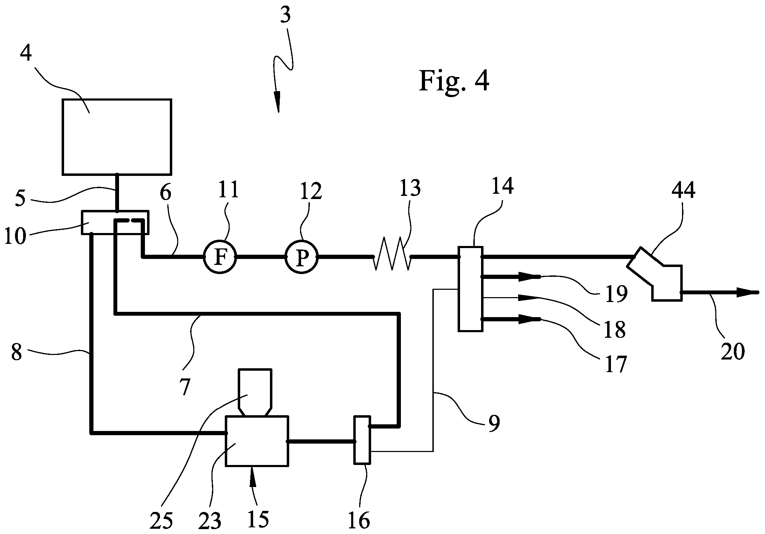

Der in der Figur 4 gezeigte Teil eines Strömungsleitungssystems 3 eines Getränkeautomaten 1 stellt den Fluidweg hervorgehoben dar, der bei der Durchführung eines Entkalkungsprogrammes durchströmt wird. Ausgehend von dem Wassertank 4 wird hierfür über die Fluidleitung 5 Wasser in die mit der Bezugsziffer 10 bezeichnete Ventileinheit I geführt und von hier aus zunächst über die Fluidleitung 8 in die Einheit 15 aus Vorratsbehälter 25 und Träger 23 geleitet. In dem Vorratsbehälter 25 ist das Entkalkungsmittel enthalten. Das ursprünglich in einem festen Aggregatzustand vorliegende Entkalkungsmittel wird durch Ansprühen mit dem aus dem Wasserbehälter 4 stammenden Frischwasser in eine Lösung überführt und anschließend über die mit der Bezugsziffern 16 bezeichnete Ventileinheit III und eine weitere Fluidleitung 7 zu der mit der Bezugsziffer 10 bezeichneten Ventileinheit I zurückgeführt, wo durch eine entsprechende Umschaltung der Ventileinheit I die Entkalkungsmittel-Lösung in die Fluidleitung 6 überführt wird, sodass die für die Herstellung eines Aufgussgetränkes erforderlichen Aggregate 11, 12, 13, 14 und 44 sowie die zugehörigen Fluidleitungen mit dem Entkalkungsmittel beaufschlagt werden. Wie aus der Figur 4 ersichtlich ist, wurde die durch einen Pfeil symbolisierte Ausgabeeinrichtung 18 zur Abgabe von Milch nicht hervorgehoben dargestellt. Dies hat den Grund, dass die Ausgabeeinrichtung 18 nicht zwingend entkalkt werden muss. Die Ausgabeeinrichtung 18 bedarf eher regelmäßig einer Reinigung. Kalkablagerungen sind hier kaum zu erwarten. Nach der Durchführung des Entkalkungsprogrammes wird das gesamte Strömungsleitungssystem 3 des Getränkeautomaten 1 gründlich mit frischem Wasser gespült, um sämtliche Reste des Entkalkungsmittels zu entfernen.

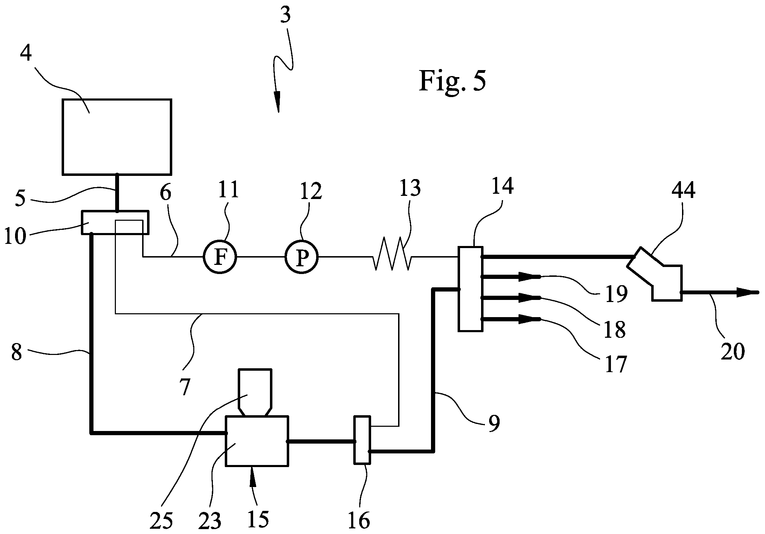

Die Durchführung eines Reinigungsprogrammes wird in der Figur 5 gezeigt, aus der ein Teil des Strömungsleitungssystems 3 eines Getränkeautomaten 1 mit einem dritten Fluidweg hervorgeht. Auch hierbei wird Frischwasser aus dem Wassertank 4 entnommen und zunächst über die Fluidleitung 5 in das Strömungsleitungssystem 3 eingespeist. Nach Durchlaufen der mit 10 bezeichneten Ventileinheit I gelangt das Frischwasser über die Fluidleitung 8 in die Einheit 15 aus dem Träger 24 und dem Vorratsbehälter 26, in dem sich im vorliegenden Fall ein Reinigungsmittel befindet. Auch bei dieser Variante wird eine Sprühvorrichtung zum Einsatz gebracht, um das in dem Vorratsbehälter 26 enthaltene, ursprünglich einen festen Aggregatzustand aufweisende Reinigungsmittel in eine Lösung zu überführen. Diese wird anschließend über die mit 16 bezeichnete Ventileinheit III und die Fluidleitung 9 unmittelbar in die mit 14 bezeichnete Ventileinheit II überführt, wo die Verteilung auf die sich anschließende Brüheinheit 44, beziehungsweise Ausgabeeinrichtungen 17, 18, 19, 20 erfolgt, die auf diese Weise gereinigt werden.

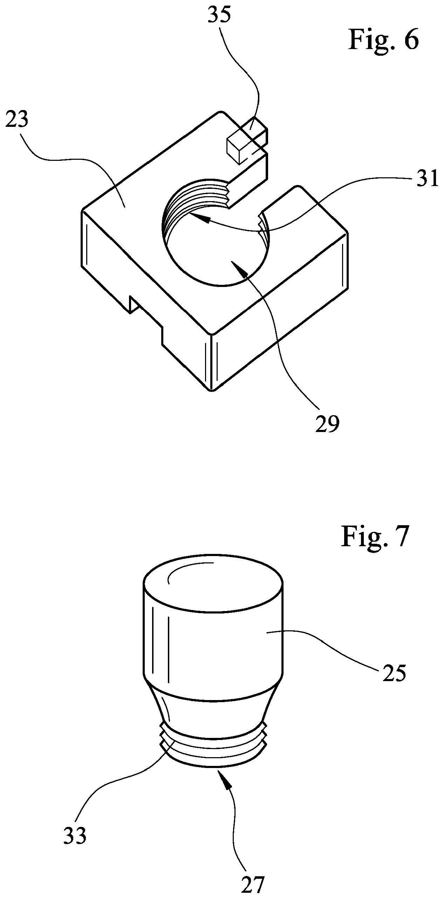

Aus der Figur 6 geht eine erste Ausführungsvariante eines Trägers 23 als isoliertes Einzelteil und in räumlicher Darstellung hervor, der eine Aufnahmeöffnung 29 aufweist, die mit einem Innengewinde 31 ausgestattet ist. In das Innengewinde 31 kann ein korrespondierendes Außengewinde 33 des in der Figur 7 gezeigten Vorratsbehälters 25 eingeschraubt werden. Dadurch wird eine formschlüssige Verbindung zwischen dem Vorratsbehälter 25 und dem diesen aufnehmenden Träger 23 hergestellt. Die Aufnahme des Vorratsbehälters 25 in dem Träger 23 erfolgt derart, dass die Behälteröffnung 27 des Vorratsbehälters 25 geozentrisch ausgerichtet ist, also nach unten weist. Aufgrund des Umstandes, dass das in dem Vorratsbehälter 25 enthaltene Entkalkungsmittel einen festen Aggregatzustand aufweist, ist diese Anordnung des Vorratsbehälters 25 im Träger 23 möglich. Die Überführung des Entkalkungsmittels in einen flüssigen Zustand erfolgt mithilfe einer Sprühvorrichtung die in die Behälteröffnung 27 des Vorratsbehälters 25 eingeführt wird, sodass anschließend frisches Wasser auf die Oberfläche des Entkalkungsmittels gesprüht werden kann. Dabei kann durch die Zeitdauer des Ansprühens oder durch die Intensität des Sprühvorganges die Konzentration des Entkalkungsmittels sehr genau eingestellt werden. Für die Steuerung dieser Vorgänge kommt die elektronische Steuerungsvorrichtung 21 des Getränkeautomaten 1 zum Einsatz. Von Bedeutung ist bei dem Träger 23 in Figur 6, dass dieser an seiner dem Aufnahmeraum 22 zugewandten Frontseite einen Signalgeber 35 aufweist, der einen Bestandteil einer Detektierungseinheit 37 bildet, was bedeutet, dass in dem Aufnahmeraum 22 des Getränkeautomaten 1 ein korrespondierender Signalaufnehmer 36 vorhanden ist. Durch die Detektierungseinheit 37 wird gewährleistet, dass die elektronische Steuerungsvorrichtung 21 ein Signal erhält, dass exakt definiert, dass im vorliegenden Fall ein Träger 23 mit einem Vorratsbehälter 25 in den Aufnahmeraum 22 eingesetzt ist und der Vorratsbehälter 25 ein Entkalkungsmittel enthält. Durch dieses Signal wird über die elektronische Steuerungsvorrichtung 21 ein Entkalkungsprogramm gestartet, wenn kein Getränkebezug erfolgt beziehungsweise wenn ein derartiges Entkalkungsprogramm erforderlich wird.

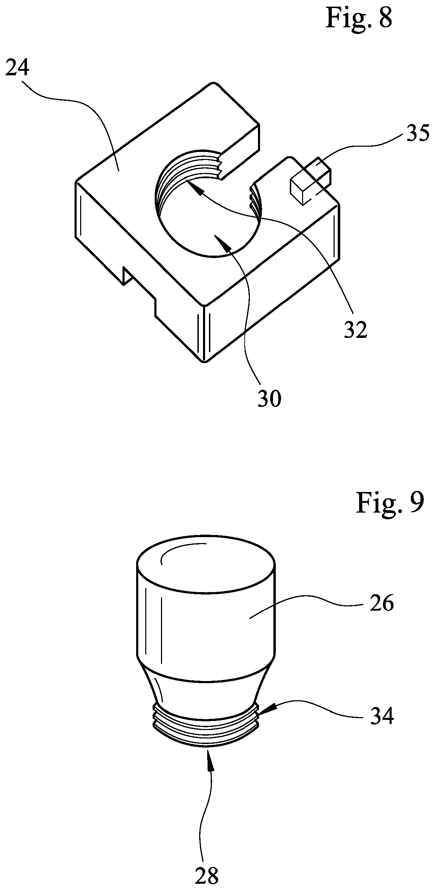

Aus der Figur 8 wird eine zweite Ausführungsvariante eines Trägers 24 als isoliertes Einzelteil und in räumlicher Darstellung ersichtlich, der eine Aufnahmeöffnung 30 aufweist, die mit einem Innengewinde 32 ausgestattet ist. Das Innengewinde 32 ist nur zu dem in der Figur 9 gezeigten Vorratsbehälter 26 passend ausgeführt, der ein korrespondierendes Außengewinde 34 hierzu aufweist. Auf diese Weise kann verhindert werden, dass versehentlich ein Vorratsbehälter 25 mit Entkalkungsmittel in den Träger 24 eingeschraubt wird. Fehlerhafte Bedienungen durch den Anwender des Getränkeautomaten 1 können damit wirksam ausgeschlossen werden. Auch der Vorratsbehälter 26 weist eine Behälteröffnung 28 auf, durch die mittels einer Sprühvorrichtung frisches Wasser auf die Oberfläche des in dem Vorratsbehälter 26 enthaltenen Reinigungsmittels aufgesprüht werden kann. Wie aus der Figur 8 deutlich wird, weist auch der Träger 24 einen Signalgeber 35 auf. Der Signalgeber 35 ist hierbei jedoch, im Unterschied zur Darstellung in Figur 6, auf der anderen Seite der Front des Trägers 24 angeordnet. Durch diese einfache Maßnahme kann erreicht werden, dass die Detektierungseinheit 37 fehlerfrei erkennt, ob sich in dem Träger 23 beziehungsweise 24 ein Vorratsbehälter 26 mit Reinigungsmittel oder ein Vorratsbehälter 25 mit Entkalkungsmittel befindet.

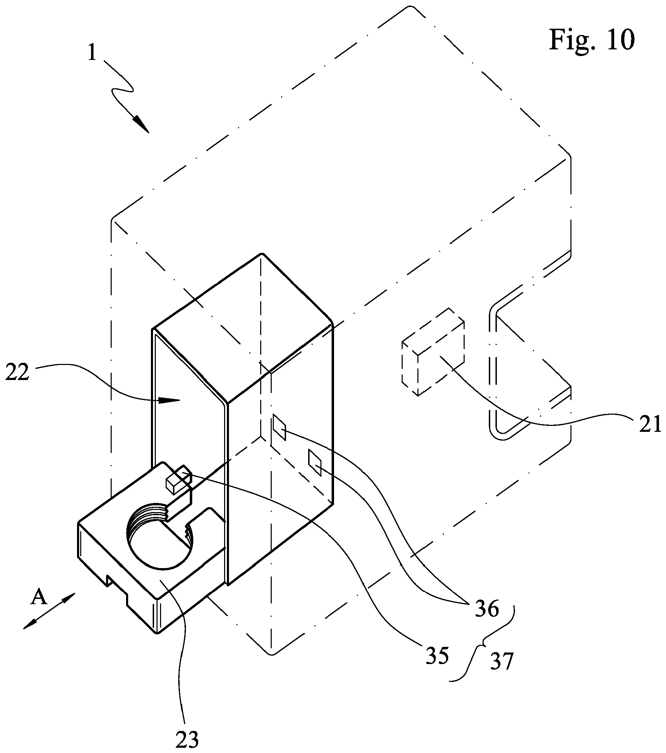

In der Figur 10 ist andeutungsweise die Rückseite 39 eines Getränkeautomaten 1 mit einem Aufnahmeraum 22 und einem teilweise darin eingeschobenen Träger 23 dargestellt. Der Träger 23 kann dabei in Richtung des Doppelpfeils A in den Aufnahmeraum 22 eingeschoben beziehungsweise aus dem Aufnahmeraum 22 entnommen werden. Der in Figur 10 gezeigte Träger 23 weist lediglich aus Vereinfachungsgründen keinen in sein Innengewinde 31 eingeschraubten Vorratsbehälter 25 auf. Die Detektierungseinheit 37 besteht im vorliegenden Fall aus einem an dem Träger 23 vorhandenen Signalgeber 35 und einem hierzu korrespondierenden Signalaufnehmer 36 an der Innenwand des Aufnahmeraumes 22. Wie aus der Darstellung in Figur 10 ferner ersichtlich ist, sind an der Innenwand des Aufnahmeraumes 22 zwei Signalaufnehmer 36 vorhanden, sodass mit der Detektierungseinheit 37 sowohl der Träger 23, als auch ein Träger 24 mit einem Vorratsbehälter 26 detektiert werden kann. Bei dem Signalgeber 35 handelt es sich im vorliegenden Fall um einen Mikroschalter.

### BEZUGSZEICHENLISTE:

- 1: Getränkeautomat
- 2: Gehäuse
- 3: Stömungsleitungssystem
- 4: Wasserquelle (Tank)
- 5: Fluidleitung
- 6: Fluidleitung
- 7: Fluidleitung
- 8: Fluidleitung
- 9: Fluidleitung
- 10: Aggregat (Ventileinheit I)
- 11: Aggregat (Durchflussmessgerät)
- 12: Aggregat (Pumpe)
- 13: Aggregat (Heizeinrichtung)
- 14: Aggregat (Ventileinheit II)
- 15: Aggregat (Einheit aus Träger und Vorratsbehälter)
- 16: Aggregat (Ventileinheit III)
- 17: Ausgabeeinrichtung (Wasserdampf)
- 18: Ausgabeeinrichtung (Milch)
- 19: Ausgabeeinrichtung (Heißwasser)
- 20: Ausgabeeinrichtung (Kaffee)
- 21: elektronische Steuerungsvorrichtung
- 22: Aufnahmeraum
- 23: Träger
- 24: Träger
- 25: Vorratsbehälter
- 26: Vorratsbehälter
- 27: Behälteröffnung
- 28: Behälteröffnung
- 29: Aufnahmeöffnung
- 30: Aufnahmeöffnung
- 31: Innengewinde
- 32: Innengewinde
- 33: Außengewinde
- 34: Außengewinde
- 35: Signalgeber
- 36: Signalaufnehmer
- 37: Detektierungseinheit
- 38: Frontseite
- 39: Rückseite
- 40: Ausgabeeinheit
- 41: Abtropfblech
- 42: Ablauföffnungen
- 43: Bohnenbehälterdeckel
- 44: Brüheinheit

## Patentansprüche

1. Getränkeautomat (1), umfassend:
- ein Gehäuse (2) mit wenigstens einer von außen frei zugänglichen Seite,
- ein Strömungsleitungssystem (3) mit einer Wasserquelle (4), Fluidleitungen (6, 7, 8, 9) und Aggregaten (10, 11, 12, 13, 14, 15, 16) zur Strömungsführung und Herstellung mindestens eines Aufgussgetränkes sowie zur Aufbereitung oder Ergänzung des Aufgussgetränkes mittels Wasserdampf oder zur Verfügung stehender Getränkezusätze und mit Ausgabeeinrichtungen (17, 18, 19, 20) zur Abgabe des Wasserdampfes, des mindestens einen Ausfgussgetränkes und/oder der Getränkezusätze,
- eine elektronische Steuerungsvorrichtung (21), die dazu ausgelegt ist, die Fluidleitungen und Aggregate zur Strömungsführung und Herstellung mindestens eines Aufgussgetränkes zu aktivieren und zu deaktivieren sowie die Steuerungs- und Überwachungsprozesse des Getränkeautomaten (1) durchzuführen,
wobei das Gehäuse (2) des Getränkeautomaten (1) an einer von außen frei zugänglichen Seite einen Aufnahmeraum (22) mit einer Kopplungsvorrichtung zur lösbaren Aufnahme eines hierzu passenden Trägers (23, 24) aufweist,
**dadurch gekennzeichnet**,
dassin den Träger (23, 24) wahlweise jeweils einer von mindestens zwei austauschbaren Vorratsbehältern (25, 26) einsetzbar und aus dem Träger (23, 24) entnehmbar ist, wobei mehrere Träger (23 und 24) vorhanden sind und jeder Träger (23, 24) eine Aufnahmeöffnung (29, 30) aufweist, in die nur einer der vorhandenen Vorratsbehälter (25, 26) formschlüssig einsetzbar ist.

2. Getränkeautomat (1), umfassend:
- ein Gehäuse (2) mit wenigstens einer von außen frei zugänglichen Seite,
- ein Strömungsleitungssystem (3) mit einer Wasserquelle (4), Fluidleitungen (6, 7, 8, 9) und Aggregaten (10, 11, 12, 13, 14, 15, 16) zur Strömungsführung und Herstellung mindestens eines Aufgussgetränkes sowie zur Aufbereitung oder Ergänzung des Aufgussgetränkes mittels Wasserdampf oder zur Verfügung stehender Getränkezusätze und mit Ausgabeeinrichtungen (17, 18, 19, 20) zur Abgabe des Wasserdampfes, des mindestens einen Ausfgussgetränkes und/oder der Getränkezusätze,
- eine elektronische Steuerungsvorrichtung (21), die dazu ausgelegt ist, die Fluidleitungen und Aggregate zur Strömungsführung und Herstellung mindestens eines Aufgussgetränkes zu aktivieren und zu deaktivieren sowie die Steuerungs- und Überwachungsprozesse des Getränkeautomaten (1) durchzuführen,
wobei das Gehäuse (2) des Getränkeautomaten (1) an einer von außen frei zugänglichen Seite einen Aufnahmeraum (22) mit einer Kopplungsvorrichtung zur lösbaren Aufnahme eines hierzu passenden Trägers (23, 24) aufweist,
**dadurch gekennzeichnet,**
**dass** in den Träger (23, 24) wahlweise jeweils einer von mindestens zwei austauschbaren Vorratsbehältern (25, 26) einsetzbar und aus dem Träger (23, 24) entnehmbar ist, wobei nur ein, in zwei unterschiedlichen Einbaulagen in den Aufnahmeraum (22) einsetzbarer Träger (23) mit einer einzigen Aufnahmeöffnung (29) vorhanden ist, wobei diese Aufnahmeöffnung (29), bezogen auf eine horizontale Ebene des Trägers (23), an ihren einander gegenüberliegenden Seiten jeweils unterschiedliche Innengewinde (31, 32) aufweist, in die von je einer Seite des wendbaren Trägers (23) her jeweils nur einer der vorhandenen Vorratsbehälter (25, 26) mit seinem korrespondierenden Außengewinde (33, 34) einschraubbar ist..

3. Getränkeautomat nach Anspruch 1 oder 2,
**dadurch gekennzeichnet, dass**
die Kopplungsvorrichtung aus einer Aufnahme oder Führung für den hierzu korrespondierend ausgeführten Träger (23, 24) besteht.

4. Getränkeautomat nach einem der vorstehend genannten Ansprüche,
**dadurch gekennzeichnet, dass**
in den Vorratsbehältern (25, 26) unterschiedliche Pflegemittel aufgenommen sind.

5. Getränkeautomat nach einem der vorstehend genannten Ansprüche,
**dadurch gekennzeichnet, dass**
der erste Vorratsbehälter (25) mit einem wasserlöslichen oder mit Wasser verdünnbaren Reinigungsmittel und der zweite Vorratsbehälter (26) mit einem wasserlöslichen oder mit Wasser verdünnbaren Entkalkungsmittel befüllt ist.

6. Getränkeautomat nach einem der vorstehend genannten Ansprüche,
**dadurch gekennzeichnet, dass**
der Vorratsbehälter (25, 26) in einer vertikalen Anordnung in den Träger (23, 24) eingesetzt ist, sodass die Behälteröffnung (27, 28) geozentrisch ausgerichtet ist.

7. Getränkeautomat nach Anspruch 1,
**dadurch gekennzeichnet, dass**
die Aufnahmeöffnung (29, 30) ein Innengewinde (31, 32) und der jeweils hierzu passende Vorratsbehälter (25, 26) ein nur zu diesem Innengewinde (31, 32) korrespondierendes Außengewinde (33, 34) aufweist.

8. Getränkeautomat nach einem der vorstehend genannten Ansprüche,
**dadurch gekennzeichnet, dass**
eine aus Signalgeber (35) und Signalaufnehmer (36) bestehende Detektierungseinheit (37) vorhanden ist, sodass bei in den Aufnahmeraum (22) eingesetztem Träger (23, 24) mittels der elektronischen Steuerungsvorrichtung (21) eine Detektierung des eingesetzten Trägers (23, 24) und/oder des in dem Träger (23, 24) aufgenommenen Vorratsbehälters (25, 26) ermöglicht ist.

9. Getränkeautomat nach Anspruch 8,
**dadurch gekennzeichnet, dass**
die Detektierungseinheit (37) eine optische Signalverarbeitung aufweist, eine Codierungseinheit ist oder Microschalter aufweist, deren Signale von der elektronischen Steuerungsvorrichtung (21) verarbeitbar sind.

10. Getränkeautomat nach einem der Ansprüche 8 oder 9,
**dadurch gekennzeichnet, dass**
je Pflegemittel ein Fluidweg innerhalb des Strömungsleitungssystems (3) vorhanden ist und ein von der Detektierungseinheit (37) an die elektronische Steuerungsvorrichtung (21) übermitteltes Signal zur Freischaltung je eines Fluidweges nutzbar ist.

11. Getränkeautomat nach Anspruch 10,
**dadurch gekennzeichnet, dass**
zur Umsetzung der Schaltvorgänge und damit zur Freigabe oder Sperrung einzelner Fluidwege mindestens eine Ventileinheit (14, 15, 16) innerhalb des Strömungsleitungssystems (3) vorhanden ist.

## Claims

1. Beverage machine (1), comprising:
- a housing (2), having at least one side that is freely accessible from the outside,
- a flow line system (3), having a water source (4), fluid lines (6, 7, 8, 9) and units (10, 11, 12, 13, 14, 15, 16) for flow guidance and producing at least one infused beverage and for preparing or supplementing the infused beverage by means of steam or available beverage additives and having dispensing devices (17, 18, 19, 20) for dispensing the steam, the at least one infused beverage and/or the beverage additives,
- an electronic control device (21), which is designed to activate and deactivate the fluid lines and units for flow guidance and producing at least one infused beverage and to carry out the control and monitoring processes of the beverage machine (1),
the housing (2) of the beverage machine (1) having a receiving chamber (22), on a side that is freely accessible from the outside, which receiving chamber has a coupling device for detachably receiving a carrier (23, 24) that matches therewith, **characterised in that**
optionally one of at least two interchangeable reservoirs (25, 26) can be inserted into the carrier (23, 24) and removed from the carrier (23, 24), a plurality of carriers (23 and 24) being provided and each carrier (23, 24) having a receiving opening (29, 30) into which only one of the provided reservoirs (25, 26) can be inserted in an interlocking manner.

2. Beverage machine (1), comprising:
- a housing (2), having at least one side that is freely accessible from the outside,
- a flow line system (3) having a water source (4), fluid lines (6, 7, 8, 9) and units (10, 11, 12, 13, 14, 15, 16) for flow guidance and producing at least one infused beverage and for preparing or supplementing the infused beverage by means of steam or available beverage additives and having dispensing devices (17, 18, 19, 20) for dispensing the steam, the at least one infused beverage and/or the beverage additives,
- an electronic control device (21), which is designed to activate and deactivate the fluid lines and units for flow guidance and producing at least one infused beverage and to carry out the control and monitoring processes of the beverage machine (1),
the housing (2) of the beverage machine (1) having a receiving chamber (22), on a side that is freely accessible from the outside, which receiving chamber has a coupling device for detachably receiving a carrier (23, 24) that matches therewith, **characterised in that**
optionally one of at least two interchangeable reservoirs (25, 26) can be inserted into the carrier (23, 24) and removed from the carrier (23, 24), only one carrier (23), which is insertable into the receiving chamber (22) in two different installation positions and has a single receiving opening (29), being provided, this receiving opening (29) having different internal threads (31, 32) on its opposite sides, in relation to a horizontal plane of the carrier (23), into which only one of the provided reservoirs (25, 26) can be screwed using its corresponding external thread (33, 34) from each side of the reversible carrier (23).

3. Beverage machine according to either claim 1 or claim 2,
**characterised in that**
the coupling device consists of a receptacle or guide for the corresponding carrier (23, 24).

4. Beverage machine according to any of the preceding claims,
**characterised in that**
different maintenance products are accommodated in the reservoirs (25, 26).

5. Beverage machine according to any of the preceding claims,
**characterised in that**
the first reservoir (25) is filled with a water-soluble or water-dilutable cleaning agent and the second reservoir (26) is filled with a water-soluble or water-dilutable descaling agent.

6. Beverage machine according to any of the preceding claims,
**characterised in that**
the reservoir (25, 26) is inserted into the support (23, 24) in a vertical arrangement such that the container opening (27, 28) is geocentrically aligned.

7. Beverage machine according to claim 1,
**characterised in that**
the receiving opening (29, 30) has an internal thread (31, 32) and the respective matching reservoir (25, 26) has an external thread (33, 34) corresponding only to this internal thread (31, 32).

8. Beverage machine according to any of the preceding claims,
**characterised in that**
a detection unit (37) consisting of a signal transmitter (35) and a signal receiver (36) is provided, and therefore when the carrier (23, 24) is inserted into the receiving chamber (22), the electronic control device (21) can detect the inserted carrier (23, 24) and/or the reservoir (25, 26) accommodated in the carrier (23, 24).

9. Beverage machine according to claim 8,
**characterised in that**
the detection unit (37) has optical signal processing, is a coding unit or has microswitches, the signals of which can be processed by the electronic control device (21).

10. Beverage machine according to either claim 8 or claim 9,
**characterised in that**
a fluid path is provided within the flow line system (3) for each maintenance product and a signal transmitted from the detection unit (37) to the electronic control device (21) can be used to release one fluid path each.

11. Beverage machine according to claim 10,
**characterised in that**
at least one valve unit (14, 15, 16) is provided within the flow line system (3) to implement the switching processes and thus to release or block individual fluid paths.

## Revendications

1. Distributeur automatique de boissons (1), comprenant :
- un boîtier (2) comportant au moins un côté librement accessible depuis l'extérieur,
- un système de conduite d'écoulement (3) comportant une source d'eau (4), des conduites de fluide (6, 7, 8, 9) et des agrégats (10, 11, 12, 13, 14, 15, 16) pour la régulation du débit et la production d'au moins une boisson infusée ainsi que pour la préparation ou l'ajout de vapeur d'eau à la boisson infusée ou pour la fourniture d'additifs de boisson disponibles, et comportant des systèmes de sortie (17, 18, 19, 20) pour la distribution de la vapeur d'eau, de ladite au moins une boisson infusée et/ou des additifs de boisson,
- un dispositif de commande électronique (21) qui est configuré pour activer et désactiver les conduites de fluide et les agrégats pour la régulation du débit et la production d'au moins une boisson infusée ainsi que pour exécuter les processus de commande et de surveillance du distributeur automatique de boissons (1),
dans lequel le boîtier (2) du distributeur automatique de boissons (1) présente un espace de réception (22) sur un côté librement accessible depuis l'extérieur comportant un dispositif d'accouplement permettant de recevoir de manière amovible un support (23, 24) s'adaptant dans celui-ci,
**caractérisé en ce**
**que** respectivement l'un d'au moins deux récipients de stockage (25, 26) interchangeables peut être inséré dans le support (23, 24) et retiré du support (23, 24), plusieurs supports (23 et 24) étant prévus et chaque support (23, 24) présentant une ouverture de réception (29, 30) dans laquelle seulement l'un des récipients de stockage (25, 26) prévus peut être inséré par complémentarité de forme.

2. Distributeur automatique de boissons (1), comprenant :
- un boîtier (2) comportant au moins un côté librement accessible depuis l'extérieur,
- un système de conduite d'écoulement (3) comportant une source d'eau (4), des conduites de fluide (6, 7, 8, 9) et des agrégats (10, 11, 12, 13, 14, 15, 16) pour la régulation du débit et la production d'au moins une boisson infusée ainsi que pour la préparation ou l'ajout de vapeur d'eau à la boisson infusée ou pour la fourniture d'additifs de boisson disponibles, et comportant des systèmes de sortie (17, 18, 19, 20) pour la distribution de la vapeur d'eau, de ladite au moins une boisson infusée et/ou des additifs de boisson,
- un dispositif de commande électronique (21) qui est configuré pour activer et désactiver les conduites de fluide et les agrégats pour la régulation du débit et la production d'au moins une boisson infusée ainsi que pour exécuter les processus de commande et de surveillance du distributeur automatique de boissons (1),
dans lequel le boîtier (2) du distributeur automatique de boissons (1) présente un espace de réception (22) sur un côté librement accessible depuis l'extérieur comportant un dispositif d'accouplement permettant de recevoir de manière amovible un support (23, 24) s'adaptant dans celui-ci,
**caractérisé en ce**
**que** respectivement l'un d'au moins deux récipients de stockage (25, 26) interchangeables peut être inséré dans le support (23, 24) et retiré du support (23, 24), un seul support (23) comportant une seule ouverture de réception (29) et pouvant être inséré dans l'espace de réception (22) en deux positions de montage différentes étant prévu, ladite ouverture de réception (29) présentant respectivement des filetages internes (31, 32) différents sur ses côtés opposés l'un à l'autre, par rapport à un plan horizontal du support (23), dans lesquels filetages internes respectivement seulement l'un des récipients de stockage (25, 26) prévus peut être vissé avec son filetage externe (33, 34) correspondant depuis un côté du support (23) réversible.

3. Distributeur automatique de boissons selon la revendication 1 ou 2,
**caractérisé en ce que**
le dispositif d'accouplement est constitué d'un logement ou guide pour le support (23, 24) guidé correspondant.

4. Distributeur automatique de boissons selon l'une des revendications précédentes précitées,
**caractérisé en ce que**
différents produits d'entretien sont logés dans les récipients de stockage (25, 26).

5. Distributeur automatique de boissons selon l'une des revendications précédentes précitées,
**caractérisé en ce que**
le premier récipient de stockage (25) est rempli d'un agent de nettoyage hydrosoluble ou pouvant être dilué dans l'eau et le second récipient de stockage (26) est rempli d'un agent détartrant hydrosoluble ou pouvant être dilué dans l'eau.

6. Distributeur automatique de boissons selon l'une des revendications précédentes précitées,
**caractérisé en ce que**
le récipient de stockage (25, 26) est inséré dans le support (23, 24) dans une disposition verticale de telle sorte que l'ouverture de récipient (27, 28) est alignée géocentriquement.

7. Distributeur automatique de boissons selon la revendication 1,
**caractérisé en ce que**
l'ouverture de réception (29, 30) présente un filetage interne (31, 32) et le récipient de stockage (25, 26) respectif correspondant présente un filetage externe (33, 34) correspondant uniquement audit filetage interne (31, 32).

8. Distributeur automatique de boissons selon l'une des revendications précédentes précitées,
**caractérisé en ce que**
une unité de détection (37) composée d'un transmetteur de signal (35) et d'un récepteur de signal (36) est prévue, de sorte que lorsque le support (23, 24) est inséré dans l'espace de réception (22), une détection du support (23, 24) inséré et/ou du récipient de stockage (25, 26) logé dans le support (23, 24) est permise par le dispositif de commande électronique (21).

9. Distributeur automatique de boissons selon la revendication 8,
**caractérisé en ce que**
l'unité de détection (37) présente un traitement de signal optique, est une unité de codage ou présente des micro-commutateurs dont les signaux peuvent être traités par le dispositif de commande électronique (21).

10. Distributeur automatique de boissons selon l'une des revendications 8 ou 9, **caractérisé en ce que**
un trajet de fluide à l'intérieur du système de conduite d'écoulement (3) est prévu pour chaque produit d'entretien et un signal transmis de l'unité de détection (37) au dispositif de commande électronique (21) peut être utilisé pour débloquer un trajet de fluide.

11. Distributeur automatique de boissons selon la revendication 10,
**caractérisé en ce que**
au moins une unité de soupape (14, 15, 16) est prévue à l'intérieur du système de conduite d'écoulement (3) pour mettre en œuvre les processus de commutation et pour ainsi libérer ou bloquer des trajets de fluide individuels.
